# EUROPEAN PATENT APPLICATION

(11) **EP 4 557 334 A2**
(43) Date of publication of application: **21.05.2025**
(21) Application number: 24205518.4
(22) Date of filing: 09.10.2024
(51) Int. Cl.: H01G 4/224, H01G 4/232, H01G 4/12, H01G 4/30

(54) **MULTILAYER ELECTRONIC COMPONENT**

(30) Priority: 16.11.2023 KR 20230159448
(71) Applicant: Samsung Electro-Mechanics Co., Ltd., Gyeonggi-do (KR)
(72) Inventor: Heo, Jae Eun, Suwon-si, Gyeonggi-do (KR); Kim, Yong Min, Suwon-si, Gyeonggi-do (KR); Lee, Chung Eun, Suwon-si, Gyeonggi-do (KR); Lee, Sang Hyeon, Suwon-si, Gyeonggi-do (KR); Choi, Hyung Jong, Suwon-si, Gyeonggi-do (KR); Bak, Chae Won, Suwon-si, Gyeonggi-do (KR)
(74) Representative: Grünecker Patent- und Rechtsanwälte PartG mbB

(57) **Abstract**

A multilayer electronic component may include: a body including a dielectric layer and internal electrodes, the body having opposing first and second surfaces and opposing third and fourth surfaces; a first external electrode including a first connection portion on the third surface, and a first band portion extending from the first connection portion to the first surface; a second external electrode including a second connection portion on the fourth surface, and a second band portion extending from the second connection portion to the first surface; and an insulating layer disposed on the second surface to extend onto the first and second band portions. The first and second external electrodes may include an electrode layer and a plating layer on the electrode layer, and the insulating layer may be in contact with the electrode layer in the first and second band portions and may cover an end of the electrode layer.

## Description

### CROSS-REFERENCE TO RELATED APPLICATION(S)

This application claims benefit of priority to Korean Patent Application No. 10-2023-0159448 filed on November 16, 2023 in the Korean Intellectual Property Office, the disclosure of which is incorporated herein by reference in its entirety.

### TECHNICAL FIELD

The present disclosure relates to a multilayer electronic component.

A multilayer ceramic capacitor (MLCC), a multilayer electronic component, may be a chip-type condenser mounted on the printed circuit boards of any of various electronic products, such as an imaging device, including a liquid crystal display (LCD) or a plasma display panel (PDP), a computer, a smartphone, or a mobile phone, serving to charge or discharge electricity therein or therefrom.

Such a multilayer ceramic capacitor has a small size, implements high capacitance, and is easily mounted on a circuit board, and may thus be used as a component of various electronic devices. There has been increasing demand for a multilayer ceramic capacitor to have a smaller size and higher capacitance as various electronic devices such as a computer and a mobile device have a smaller size and higher output.

In addition, as interest in electronic components for automobiles has recently increased, a multilayer ceramic capacitor used as an electronic component for automobiles requires a high level of electrical reliability and impact resistance.

In particular, there is demand for the development of a multilayer ceramic capacitor with excellent bending strength characteristics and strong durability against deformation of a substrate on which the multilayer ceramic capacitor is mounted.

### SUMMARY

An aspect of the present disclosure is to provide a multilayer electronic component having improved reliability.

An aspect of the present disclosure is to provide a multilayer electronic component having improved bending strength characteristics.

An aspect of the present disclosure is to provide a multilayer electronic component having excellent bonding force between an external electrode and a body.

However, the purpose of the present disclosure is not limited to the above-described content, and may be more easily understood in the process of explaining specific embodiments of the present disclosure.

According to an aspect of the present disclosure, a multilayer electronic component may include: a body including a dielectric layer and first and second internal electrodes alternately disposed with the dielectric layer interposed therebetween, the body having first and second surfaces opposing each other in a first direction, third and fourth surfaces connected to the first and second surfaces and opposing each other in a second direction, and fifth and sixth surfaces connected to the first to fourth surfaces and opposing each other in a third direction; a first external electrode including a first connection portion disposed on the third surface, and a first band portion extending from the first connection portion to a portion of the first surface; a second external electrode including a second connection portion disposed on the fourth surface, and a second band portion extending from the second connection portion to a portion of the first surface; and an insulating layer disposed on the second surface to extend onto the first and second band portions. The first and second external electrodes may include an electrode layer and a plating layer disposed on the electrode layer, and the insulating layer may be disposed to be in contact with the electrode layer in the first and second band portions and to cover an end of the electrode layer.

According to an aspect of the present disclosure, a multilayer electronic component may include: a body including a dielectric layer and first and second internal electrodes alternately disposed with the dielectric layer interposed therebetween, the body having first and second surfaces opposing each other in a first direction, third and fourth surfaces connected to the first and second surfaces and opposing each other in a second direction, and fifth and sixth surfaces connected to the first to fourth surfaces and opposing each other in a third direction; a first external electrode including a first connection portion disposed on the third surface, and a first band portion extending from the first connection portion to a portion of the first surface; a second external electrode including a second connection portion disposed on the fourth surface, and a second band portion extending from the second connection portion to a portion of the first surface; and an insulating layer disposed on the second surface to extend onto the first and second band portions to partially cover the first and second band portions. The first and second external electrodes may include a plating layer extending in a partial region of the first and second band portions.

### BRIEF DESCRIPTION OF DRAWINGS

The above and other aspects, features, and advantages of the present disclosure will be more clearly understood from the following detailed description, taken in conjunction with the accompanying drawings.
FIG. 1 schematically illustrates a perspective view of a multilayer electronic component according to an embodiment of the present disclosure.
FIG. 2 schematically illustrates a perspective view of the multilayer electronic component of FIG. 1 when viewed in another direction.
FIG. 3 is a cross-sectional view taken along line I-I' of FIG. 1.
FIG. 4 is a cross-sectional view taken along line II-II' of FIG. 1.
FIG. 5 is an exploded perspective view schematically illustrating the body of FIG. 2 disassembled.
FIG. 6 is an enlarged view of area K1 of FIG. 3.

### DETAILED DESCRIPTION

Hereinafter, embodiments of the present disclosure will be described as follows with reference to the attached drawings. The present disclosure may, however, be exemplified in many different forms and should not be construed as being limited to the specific embodiments set forth herein. Rather, these embodiments are provided so that this disclosure will be thorough and complete, and will fully convey the scope of the disclosure to those skilled in the art. Accordingly, shapes and sizes of elements in the drawings may be exaggerated for clear description, and elements indicated by the same reference numerals are the same elements in the drawings.

In the drawings, irrelevant descriptions will be omitted to clearly describe the present disclosure, and to clearly express a plurality of layers and areas, thicknesses may be magnified. The same elements having the same function within the scope of the same concept will be described with use of the same reference numerals. Throughout the specification, when a component is referred to as "comprise" or "comprising," it means that it may further include other components as well, rather than excluding other components, unless specifically stated otherwise.

In the drawings, a first direction may refer to a stacking direction or a thickness (T) direction, a second direction may refer to a length (L) direction, and a third direction may refer to a width (W) direction.

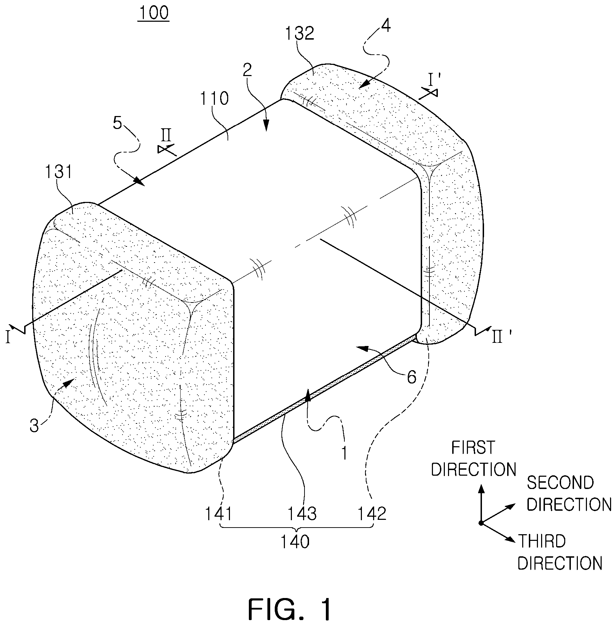

FIG. 1 schematically illustrates a perspective view of a multilayer electronic component according to an embodiment of the present disclosure.

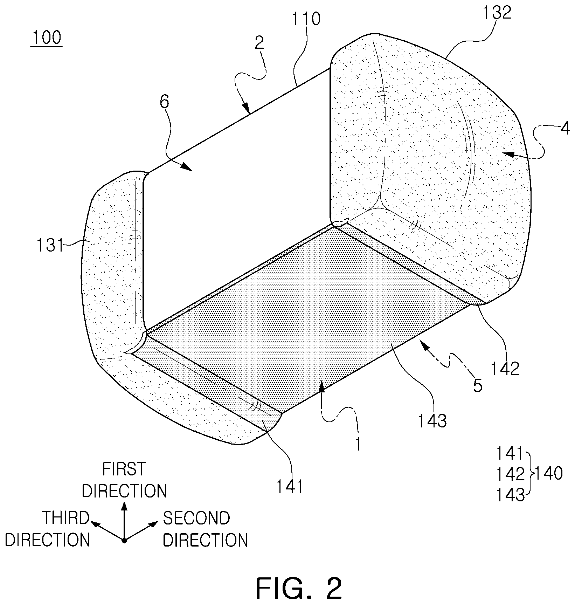

FIG. 2 schematically illustrates a perspective view of the multilayer electronic component of FIG. 1 when viewed in another direction.

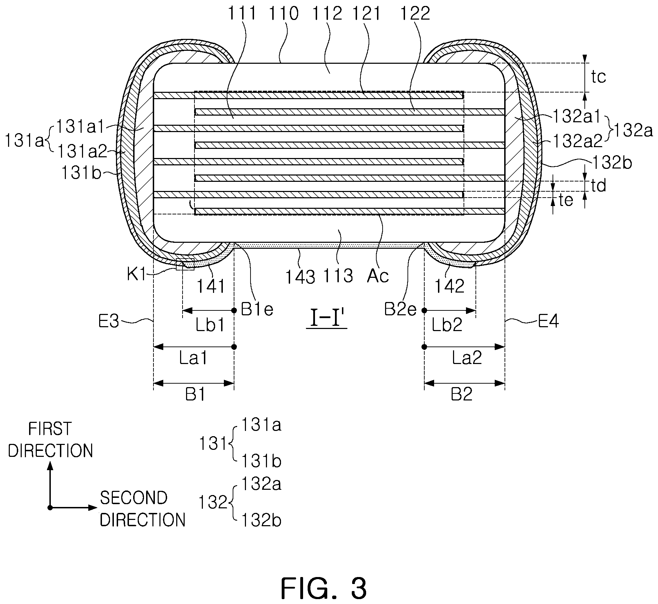

FIG. 3 is a cross-sectional view taken along line I-I' of FIG. 1.

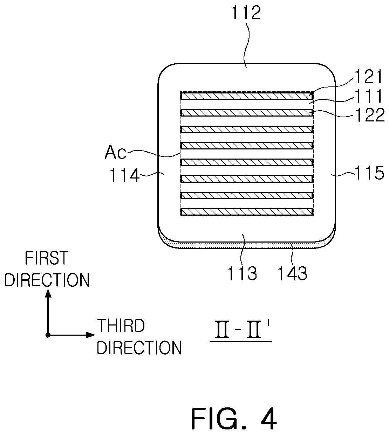

FIG. 4 is a cross-sectional view taken along line II-II' of FIG. 1.

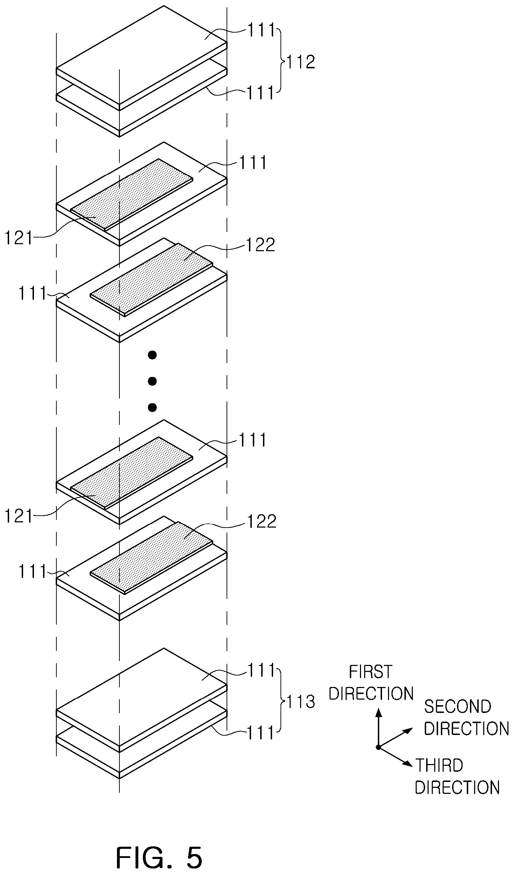

FIG. 5 is an exploded perspective view schematically illustrating the body of FIG. 2 disassembled.

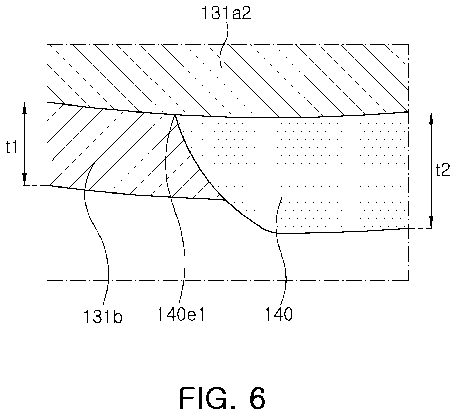

FIG. 6 is an enlarged view of area K1 of FIG. 3.

Hereinafter, a multilayer electronic component 100 according to an embodiment in the present disclosure will be described with reference to FIGS. 1 to 6.

According to an aspect of the present disclosure, the multilayer electronic component 100 may include: a body 110 including a dielectric layer 111 and first and internal electrodes 121 and 122 alternately disposed with the dielectric layer 111 interposed therebetween, the body 110 having first and second surfaces 1 and 2 opposing each other in a first direction, third and fourth surfaces 3 and 4 connected to the first and second surfaces 1 and 2 and opposing each other in a second direction, and fifth and sixth surfaces 5 and 6 connected to the first to fourth surfaces 1 to 4 and opposing each other in a third direction; a first external electrode 131 including a first connection portion disposed on the third surface 3 and a first band portion B1 extending from the first connection portion to a portion of the first surface 1; a second external electrode 132 including a second connection portion disposed on the fourth surface 4 and a second band portion B2 extending from the second connection portion to a portion of the first surface 1; and an insulating layer 140 disposed on the second surface 2 and disposed to extend onto the first and second band portions B1 and B2. The first and second external electrodes may include electrode layers 131a and 131b and plating layers 131b and 132b disposed on the electrode layers 131a and 131b, and the insulating layer 140 may be disposed to be in contact with the electrode layer 131a/131b in the first and second band portions B1 and B2 and to cover an end of the electrode layer 131a/131b.

The body 110 has a dielectric layer 111 and internal electrodes 121 and 122, alternately stacked therein.

The body 110 is not limited to a particular shape, and may have a hexahedral shape or a shape similar to the hexahedral shape, as illustrated in the drawings. The body 110 may not have a hexahedral shape having perfectly straight lines because ceramic powder particles included in the body 110 are contracted in a process in which the body is sintered. However, the body 110 may have a substantially hexahedral shape.

The body 110 may have first and second surfaces 1 and 2 opposing each other in a first direction, third and fourth surfaces 3 and 4 connected to the first and second surfaces 1 and 2 and opposing each other in a second direction, and fifth and sixth surfaces 5 and 6 connected to the first and second surfaces 1 and 2, connected to the third and fourth surfaces 3 and 4, and opposing each other in a third direction.

In an embodiment, the body 110 may include a 1-3 corner connecting the first and third surfaces 1 and 3, a 1-4 corner connecting the first and fourth surfaces 1 and 4, a 2-3 corner connecting the second and third surfaces 2 and 3, and a 2-4 corner connecting the second and fourth surfaces 2 and 4, and the 1-3 corner and the 2-3 corner may have a form contracted to a center of the body 110 in the first direction, toward the third surface 3, and the 1-4 corner and the 2-4 corner may have a form contracted to a center of the body 110 in the first direction, toward the fourth surface 4.

As a margin region, in which the internal electrodes 121 and 122 are not disposed, overlaps the dielectric layer 111, a step may be formed by thicknesses of the internal electrodes 121 and 122, so that a corner connecting the first surface 1 and the third to fifth surfaces 3 to 5 and/or a corner connecting the second surface 2 and the third to fifth surfaces 3 to 5 may have a shape contracted to the center of the body 110 in the first direction when viewed with respect to the first surface 1 or the second surface 2. Alternatively, by contraction behavior during a sintering process of the body, a corner connecting the first surface 1 and the third to sixth surfaces 3, 4, 5, and 6 and/or a corner connecting the second surface 2 and the third to sixth surfaces 3, 4, 5, to 6 may have a shape contracted to a center of the body 110 in the first direction when viewed with respect to the first surface 1 or the second surface 2. Alternatively, as an edge connecting respective surfaces of the body 110 to each other is rounded by performing an additional process to prevent chipping defects, or the like, a corner connecting the first surface 1 and the third to sixth surfaces 3 to 6 and/or a corner connecting the second surface 2 and the third to sixth surfaces 3 to 6 may have a rounded shape.

The corner may include a 1-3 corner connecting the first surface 1 and the third surface 3, a 1-4 corner connecting the first surface 1 and the fourth surface 4, a 2-3 corner connecting the second surface 2 and the third surface 3, and a 2-4 corner connecting the second surface 2 and the fourth surface 4. In addition, the corner may include a 1-5 corner connecting the first surface 1 and the fifth surface 5, a 1-6 corner connecting the first surface 1 and the sixth surface 6, a 2-5 corner connecting the second surface 2 and the fifth surface 5, and a 2-6 corner connecting the second surface 2 and the sixth surface 6. The first to sixth surfaces 1 to 6 of the body 110 may be overall planar surfaces, and non-planar regions may be corners. Hereinafter, an extension line of each surface may refer to a line extending based on a planar portion of each surface.

Meanwhile, in order to suppress the step formed by the internal electrodes 121 and 122, after the internal electrodes are cut so as to be exposed to the fifth and sixth surfaces 5 and 6 of the body after stacking, when margin portions 114 and 115 are formed by stacking a single dielectric layer or two or more dielectric layers on both side surfaces of the capacitance formation portion Ac in a third direction (width direction), a portion connecting the first surface 1 to the fifth and sixth surfaces 5 and 6 and a portion connecting the second surface 2 to the fifth and sixth surfaces 5 and 6 may not have a contracted form.

A plurality of dielectric layers 111 forming the body 110 may be in a sintered state, and adjacent dielectric layers 111 may be integrated with each other, such that boundaries therebetween may not be readily apparent without using a scanning electron microscope (SEM).

According to an embodiment of the present disclosure, a raw material for forming the dielectric layer 111 is not particularly limited, as long as sufficient electrostatic capacitance may be obtained therewith. For example, the raw material for forming the dielectric layer 111 may be a barium titanate (BaTiO₃)-based material, a lead composite perovskite-based material, a strontium titanate (SrTiO₃)-based material, or the like. The barium titanate-based material may include BaTiO₃-based ceramic powder particles, and the ceramic powder particles may be, for example, BaTiO₃, (Ba₁₋ₓCaₓ)TiO₃, Ba(Ti_{1-y}Ca_{y})O₃, (Ba₁₋ₓCaₓ)(Ti_{1-y}Zr_{y})O₃ or Ba(Ti_{1-y}Zr_{y})O₃, in which calcium (Ca), zirconium (Zr), or the like, are partially dissolved in BaTiO₃, and the like.

In addition, a raw material forming the dielectric layer 111 may include various ceramic additives, organic solvents, binders, dispersants, and the like, added to powder particles such as barium titanate (BaTiO₃) powder particles, or the like, according to an object of the present disclosure.

Meanwhile, an average thickness "td" of the dielectric layer 111 is not particularly limited. For example, the average thickness "td" of the dielectric layer 111 may be 0.2 to 3um.

The average thickness "td" of the dielectric layer 111 may mean an average thickness of the dielectric layer 111 disposed between the first and second internal electrodes 121 and 122.

The average thickness of the dielectric layer 111 may be measured from an image obtained by scanning a cross-section of the body 110 in length and thickness directions (L-T directions) with a scanning electron microscope (SEM) with a magnification of 10,000. More specifically, an average value may be measured by measuring a thickness of one dielectric layer at 30 equally spaced points in the length direction from the scanned image. The 30 points having equal intervals may be designated in a capacitance formation portion Ac. In addition, if the average value is measured by extending the average value measurement to 10 dielectric layers, the average thickness of the dielectric layers can be more generalized.

The body 110 may include a capacitance formation portion Ac disposed in the body 110, and including a first internal electrode 121 and a second internal electrode 122 disposed to oppose each other with the dielectric layer 111 interposed therebetween and having capacitance formed therein, and cover portions 112 and 113 formed above and below the capacitance formation portion Ac in the first direction.

In addition, the capacitance formation portion Ac is a portion serving to contribute to capacitance formation of a capacitor, and may be formed by repeatedly stacking a plurality of first and second internal electrodes 121 and 122 with a dielectric layer 111 interposed therebetween.

The cover portions 112 and 113 may include an upper cover portion 112 disposed above the capacitance formation portion Ac in the first direction, and a lower cover portion 113 disposed below the capacitance formation portion Ac in the first direction.

The upper cover portion 112 and the lower cover portion 113 may be formed by laminating a single dielectric layer or two or more dielectric layers on the upper and lower surfaces of the capacitance formation portion Ac in a thickness direction, respectively, and the upper cover portion 112 and the lower cover portion 113 may serve to basically prevent damage to the internal electrodes due to physical or chemical stress.

The upper cover portion 112 and the lower cover portion 113 may not include internal electrodes, and may include the same material as that of the dielectric layer 111.

That is, the upper cover portion 112 and the lower cover portion 113 may include a ceramic material, for example, a barium titanate (BaTiO₃)-based ceramic material.

Meanwhile, an average thickness of the cover portions 112 and 113 is not particularly limited. However, an average thickness "tc" of the cover portions 112 and 113 may be 400 um or less.

The average thickness "tc" of the cover portions 112 and 113 may mean a size thereof in the first direction, and may be a value obtained by averaging sizes of the cover portions 112 and 113 in the first direction measured at five points having equal intervals above or below the capacitance formation portion Ac.

In addition, margin portions 114 and 115 may be disposed on a side surface of the capacitance formation portion Ac.

The margin portions 114 and 115 may include a first margin portion 114 disposed on the fifth surface 5 of the body 110 and a second margin portion 115 disposed on the sixth surface 6 thereof. That is, the margin portions 114 and 115 may be disposed on both end surfaces of the body 110 in a width direction.

The margin portions 114 and 115 may mean a region between both ends of the first and second internal electrodes 121 and 122 and an interface of the body 110 in a cross-section of the body 110 taken in a width-thickness (W-T) direction, as illustrated in FIG. 4.

The margin portions 114 and 115 may basically serve to prevent damage to the internal electrodes due to physical or chemical stresses.

The margin portions 114 and 115 may be formed by applying a conductive paste to the ceramic green sheet, except where margin portions are to be formed, to form an internal electrode.

In addition, in order to suppress the step by the internal electrodes 121 and 122, after the internal electrodes are cut so as to be exposed to the fifth and sixth surfaces 5 and 6 of the body after stacking, the margin portions 114 and 115 may also be formed by stacking a single dielectric layer or two or more dielectric layers on both side surfaces of the capacitance formation portion Ac in the third direction (width direction).

Meanwhile, a width of the margin portions 114 and 115 is not particularly limited. For example, an average thickness "tc" of the cover portions 112 and 113 may be 400 um or less.

The average width of the margin portions 114 and 115 may mean an average size of the margin portions 114 and 115 in a third direction, and may be a value obtained by averaging sizes of the margin portions 114 and 115 in the third direction measured at five points spaced apart at equal intervals in terms of the capacitance formation portion Ac.

The internal electrodes 121 and 122 are alternately stacked with the dielectric layer 111.

The internal electrodes 121 and 122 may include first and second internal electrodes 121 and 122. The first and second internal electrodes 121 and 122 may be alternately disposed to oppose each other with the dielectric layer 111 comprising the body 110 interposed therebetween, and may be respectively exposed to the third and fourth surfaces 3 and 4 of the body 110.

Referring to FIG. 3, the first internal electrode 121 may be spaced apart from the fourth surface 4 and exposed through the third surface 3, and the second internal electrode 122 may be spaced apart from the third surface 3 and exposed through the fourth surface 4. A first external electrode 131 may be disposed on the third surface 3 of the body and connected to the first internal electrode 121, and a second external electrode 132 may be disposed on the fourth surface 4 of the body and connected to the second internal electrode 122.

That is, the first internal electrode 121 is not connected to the second external electrode 132 but is connected to the first external electrode 131, and the second internal electrode 122 is not connected to the first external electrode 131 but is connected to the second external electrode 132. Accordingly, the first internal electrode 121 may be formed to be spaced apart from the fourth surface 4 by a predetermined distance, and the second internal electrode 122 may be formed to be spaced apart from the third surface 3 by a predetermined distance.

In this case, the first and second internal electrodes 121 and 122 may be electrically isolated from each other by the dielectric layer 111 disposed in a middle.

The body 110 may be formed by alternately laminating a ceramic green sheet on which the first internal electrode 121 is printed and a ceramic green sheet on which the second internal electrode 122 is printed, followed by sintering.

A material for forming the internal electrodes 121 and 122 is not particularly limited, and as the material, a material having excellent electrical conductivity may be used. For example, the internal electrodes 121 and 122 may include at least one of nickel (Ni), copper (Cu), palladium (Pd), silver (Ag), gold (Au), platinum (Pt), tin (Sn), tungsten (W), titanium (Ti), and alloys thereof.

In addition, the internal electrodes 121 and 122 may be formed by printing a conductive paste for the internal electrodes including at least one of nickel (Ni), copper (Cu), palladium (Pd), silver (Ag), gold (Au), platinum (Pt), tin (Sn), tungsten (W), titanium (Ti) and alloys thereof on a ceramic green sheet. A method for printing the conductive paste for the internal electrodes may be a screen-printing method or a gravure printing method, but the present disclosure is not limited thereto.

Meanwhile, an average thickness "te" of the internal electrodes 121 and 122 is not particularly limited. For example, the average thickness "te" of the internal electrodes 121 and 122 may be 0.2 to 2 µm.

The average thickness "te" of the internal electrodes 121 and 122 may mean an average thickness of the internal electrodes 121 and 122.

The average thickness of the internal electrodes 121 and 122 may be measured by scanning an image of a cross-section of the body 110 in length and thickness directions (L-T directions) with a scanning electron microscope (SEM) with a magnification of 10,000. More specifically, an average value may be measured by measuring a thickness of one internal electrode at 30 equally spaced points in the length direction from the scanned image. The 30 points having equal intervals may be designated in the capacitance formation portion Ac. In addition, if the average value is measured by extending the average value measurement to 10 internal electrodes, the average thickness of the internal electrodes can be more generalized.

External electrodes 131 and 132 may be disposed on the third surface 3 and the fourth surface 4 of the body 110. The external electrodes 131 and 132 may include first and second external electrodes 131 and 132 respectively disposed on the third and fourth surfaces 3 and 4 of the body 110, and respectively connected to the first and second internal electrodes 121 and 122.

The external electrodes 131 and 132 may include a first external electrode 131 including a first connection portion disposed on the third surface 3 and a first band portion B1 extending from the first connection portion to a portion of the first surface 1, and a second external electrode 132 including a second connection portion disposed on the fourth surface 4 and a second band portion B2 extending from the second connection portion to a portion of the first surface 1. In this case, the first band portion B1 may refer to a region from an extension line E3 of the third surface 3 of the first external electrode 131 to a distal end B1e of the first band portion B1, and the second band portion B2 may refer to a region from an extension line E4 of the fourth surface 4 of the second external electrode 132 to a distal end B2e of the second band portion B2.

In addition, the first external electrode 131 may include a third band portion extending from the first connection portion to a portion of the second surface 2, and the second external electrode may include a fourth band portion extending from the second connection portion to a portion of the second surface 2. Furthermore, the first external electrode 131 may include a first side band portion extending from the first connection portion to a portion of the fifth and sixth surfaces 5 and 6, and the second external electrode 132 may include a second side band portion extending from the second connection portion to a portion of the fifth and sixth surfaces 5 and 6.

However, the third band portion, the fourth band portion, the first side band portion, and the second side band portion may not be essential components of the present disclosure. The first and second external electrodes 131 and 132 may not be disposed on the second surface 2, and may not be disposed on the fifth and sixth sides 5 and 6. As the first and second external electrodes 131 and 132 are not disposed on the second surface 2, the first and second external electrodes 131 and 132 may be disposed below the extension line of the second surface 2 of the body. In addition, the first and second connection portions may be disposed to be spaced apart from the fifth and sixth surfaces 5 and 6, and the first and second connection portions may be disposed to be spaced apart from the second surface 2. In addition, the first and second band portions B1 and B2 may also be disposed to be spaced apart from the fifth and sixth surfaces 5 and 6.

In the present embodiment, a structure in which the multilayer electronic component 100 has two external electrodes 131 and 132 is described. However, the number and shape of the external electrodes 131 and 132 may be changed according to the shape of the internal electrodes 121 and 122 or other purposes.

Meanwhile, the external electrodes 131 and 132 may be formed using any material as long as it has electrical conductivity, such as metal, and a specific material may be determined by considering electrical characteristics, structural stability, and the like, and may have a multilayer structure.

For example, the external electrodes 131 and 132 may include electrode layers 131a and 132a disposed on the body 110 and plating layers 131b and 132b formed on the electrode layers 131a and 132a.

For a more specific example of the electrode layers 131a and 132a, the electrode layers may be fire electrodes including a conductive metal and glass, or resin-based electrodes including a conductive metal and a resin.

In addition, the electrode layers 131a and 132a may be formed by transferring a sheet including a conductive metal onto a body, or by transferring a sheet including a conductive metal onto a fired electrode.

As a conductive metal included in the electrode layers 131a and 132a, a material having excellent electrical conductivity can be used and is not particularly limited. The conductive metal may include at least one selected from the group consisting of nickel (Ni), copper (Cu), palladium (Pd), silver (Ag), gold (Au), platinum (Pt), tin (Sn), tungsten (W), titanium (Ti) and alloys thereof.

In an embodiment, the electrode layers 131a and 132a may include base electrode layers 131a1 and 132a1 disposed to be in contact with the body 110 and conductive resin layers 131a2 and 132a2 disposed on the base electrode layers and including a conductive metal and a resin.

By including the conductive resin layers 131a2 and 132a2, bending strength can be further improved. In addition, since the conductive resin layers 131a2 and 132a2 include a resin, bonding force with the resin-including insulating layer 140 may be excellent, thereby improving the bonding force between the external electrodes 131 and 132 and the body 110.

In this case, the base electrode layers 131a1 and 132a1 may include glass. As the base electrode layers 131a1 and 132a1 include glass, the base electrode layers 131a1 and 132a1 may serve to improve the bonding force with the body. However, the present disclosure is not limited thereto and the base electrode layers 131a1 and 132a1 may be plating layers, may be formed by a deposition method such as a sputtering method or an atomic layer deposition method, and may be formed by transferring a sheet including a conductive metal.

The conductive metal used in the base electrode layers 131a1 and 132a1 is not particularly limited as long as it is formed of a material that can be electrically connected to the internal electrode to form capacitance, and may include at least one selected from the group consisting of, for example, nickel (Ni), copper (Cu), palladium (Pd), silver (Ag), gold (Au), platinum (Pt), tin (Sn), tungsten (W), titanium (Ti), and alloys thereof. The base electrode layers 131a1 and 132a1 may be formed by applying a conductive paste prepared by adding a glass frit to the conductive metal powder particles and then firing the same.

The conductive metal included in the conductive resin layers 131a2 and 132a2 serves to electrically connect the base electrode layers 131a1 and 132a1.

The conductive metal included in the conductive resin layers 131a2 and 132a2 is not particularly limited as long as it is a material that can be electrically connected to the base electrode layers 131a1 and 132a1, and may include at least one selected from the group consisting of nickel (Ni), copper (Cu), palladium (Pd), silver (Ag), gold (Au), platinum (Pt), tin (Sn), tungsten (W), titanium (Ti), and alloys thereof.

The conductive metal included in the conductive resin layers 131a2 and 132a2 may include one or more of spherical powder particles and flake-type powder particles. That is, the conductive metal may be comprised only of flake-type powder particles, only spherical powder particles, or may be a mixture of flake-type powder particles and spherical powder particles. Here, the spherical powder particles may also include a shape which is not completely spherical, for example, a shape in which a ratio of lengths of a major axis and a minor axis (major axis/minor axis) is 1.45 or less. The flake-type powder particles refer to a powder particles with a flat and elongated shape, and is not particularly limited, but for example, the ratio of lengths of the major axis and the minor axis (major axis/minor axis) may be 1.95 or more. The lengths of the major and minor axes of the spherical powder particles and the flake-shaped powder particles may be measured from an image obtained by scanning a cross-section thereof in the first and second directions (L-T cross-section) cut from the center of the ceramic electronic component in the third direction with a scanning electron microscope (SEM).

The resin included in the conductive resin layers 131a2 and 132a2 serves to ensure adhesion and absorb shocks. The resin included in the conductive resin layers 131a2 and 132a2 is not particularly limited as long as it has adhesion and shock absorption properties and can be mixed with conductive metal powder particles to make a paste, and may include, for example, an epoxy resin.

In addition, the conductive resin layers 131a2 and 132a2 may include a plurality of metal particles, an intermetallic compound, and a resin. As the conductive resin layers 131a2 and 132a2 include the intermetallic compound, electrical connectivity with the base electrode layers 131a1 and 132a1 can be further improved. The intermetallic compound may serve to improve electrical connectivity by connecting a plurality of metal particles, and may serve to surround and connect the plurality of metal particles to each other.

In this case, the intermetallic compound may include a metal with a melting point lower than a curing temperature of the resin. That is, since the intermetallic compound includes a metal with a melting point lower than the curing temperature of the resin, the metal with a melting point lower than the curing temperature of the resin melts during a drying and curing process, and an intermetallic compound is formed with a portion of the metal particles to surround the metal particles. In this case, the intermetallic compound may preferably include a metal with a low melting point of 300°C or lower.

For example, the intermetallic compound may include Sn having a melting point of 213 to 220°C. During the drying and curing process, Sn is melted, and the molten Sn wets metal particles with a high melting point such as Ag, Ni or Cu through capillary action, and reacts with a portion of the Ag, Ni or Cu metal particles, to form intermetallic compounds such as Ag₃Sn, Ni₃Sn₄, Cu₆Sn₅, and Cu₃Sn. Ag, Ni or Cu that did not participate in the reaction remain in the form of metal particles.

Accordingly, the plurality of metal particles may include at least one of Ag, Ni, and Cu, and the intermetallic compound may include at least one of Ag₃Sn, Ni₃Sn₄, Cu₆Sn₅, and Cu₃Sn.

In an embodiment, the conductive resin layers 131a2 and 132a2 may be disposed to cover the base electrode layers 131a1 and 132a1. Accordingly, when the insulating layer 140 includes a resin, bonding force with the insulating layer 140 can be further improved.

However, the present disclosure is not limited thereto, and the ends of the conductive resin layers 131a2 and 132a2 may be disposed in the first and second band portions B1 and B2 so as not to cover the ends of the base electrode layers 131a1 and 132a1. Accordingly, in an embodiment, the ends of the insulating layer 140 may be disposed to contact the base electrode layers 131a1 and 132a1 in the first and second band portions B1 and B2.

The plating layers 131b and 132b serve to improve mounting characteristics. The type of the plating layers 131b and 132b is not particularly limited, and may be plating layers including one or more of Ni, Sn, Pd, and alloys thereof, and may be formed of a plurality of layers.

For a more specific example of the plating layers 131b and 132b, the plating layers 131b and 132b may be a Ni plating layer or a Sn plating layer, may have a form in which the Ni plating layer and the Sn plating layer are sequentially formed on the electrode layers 131a and 132a, and may have a form in which the Sn plating layer, the Ni plating layer, and the Sn plating layer are sequentially formed. In addition, the plating layers 131b and 132b may include a plurality of Ni plating layer and/or a plurality of Sn plating layers.

The insulating layer 140 may be disposed on the second surface 2 and disposed to extend onto the first and second band portions B1 and B2. In addition, the insulating layer 140 may be disposed to be in contact with the electrode layers 131a and 132a in the first and second band portions B1 and B2 and to cover the ends of the electrode layers 131a and 132a.

The insulating layer 140 may include a body portion 143 disposed between the first external electrode 131and the second external electrode 132, a first extension portion 141 disposed on the first band portion B1, and a second extension portion 142 disposed on the second band portion B2.

The insulating layer 140 may serve to improve bending strength characteristics by alleviating external stress.

As the insulating layer 140 includes a body portion 143 disposed between the first external electrode 131 and the second external electrode 132, the mechanical strength of the multilayer electronic component 100 may be improved to alleviate external shocks, or the like, and permeation of moisture may be prevented by filling fine pores present in a surface of the body, to improve moisture resistance reliability. Meanwhile, when the insulating layer 140 is disposed only in a region of the second surface 2 of the body 110 in which the first and second band portions B1 and B2 are not disposed, the effect of improving the bending strength characteristics may be insufficient.

When external stress is applied to the multilayer electronic component 100 mounted on the board, the maximum stress is applied to ends of the band portion of the external electrode in contact with the board. Accordingly, in the present disclosure, the insulating layer 140 may be disposed to be in contact with the electrode layers 131a and 132a in the first and second band portions B1 and B2 and to cover the ends of the electrode layers 131a and 132a to efficiently alleviate stress when bending deformation occurs. In addition, since the ends of the electrode layers 131a and 132a may become a penetration path for a plating solution, moisture, and the like, as the insulating layer 140 is disposed to cover the ends of the electrode layers 131a and 132a, penetration of the plating solution, moisture, and the like, into the ends of the band portion of the external electrode may be suppressed, thereby improving moisture resistance reliability.

In an embodiment, the ends of the insulating layer 140 may contact the ends of the plating layers 131b and 132b in the first and second band portions B1 and B2. That is, the plating layers 131b and 132b may not be disposed in a portion of the first and second band portions B1 and B2 in which the insulating layer 140 is disposed.

As the insulating layer 140 includes an insulating material, it has insulating properties, improves bending strength properties, and may serve to prevent external moisture or plating solution from penetrating into the body.

In an embodiment, the insulating layer 140 may include a resin. As the insulating layer 140 includes a resin, the bonding force with the conductive resin layers 131a2 and 132a2 can be further strengthened, thereby further improving the bending strength.

The type of the resin included in the insulating layer 140 is not particularly limited. For example, the resin may include at least one of epoxy resin, silicone resin, fluorine resin, acrylic resin, and ethyl cellulose.

In addition, the insulating layer 140 may include the same type of resin as that included in the conductive resin layers 131a2 and 132a2. Accordingly, the bonding force between the insulating layer 140 and the conductive resin layers 131a2 and 132a2 can be further strengthened, and the bending strength can be further improved.

However, the present disclosure is not limited to the case in which the insulating layer 140 includes a resin, and the insulating layer 140 may include a ceramic material as an insulating material. In this case, the ceramic material included in the insulating layer 140 may be one or more of TiO₂, BaTiO₃, Al₂O₃, BaO, (PbZrₓTi₁₋ₓO₃) (0<x<1), SiC, MgO, and SiO₂.

In addition, the insulating layer 140 may include both resin and ceramic material.

In an embodiment, when an average length from a distal end B1e of the first band portion to the extension line E3 of the third surface 3 in the second direction is La1, and an average length from the end B1e of the first band portion to a distal end 140e1 of the insulating layer 140 disposed on the first external electrode 131 in the second direction is Lb1, La1>Lb1 may be satisfied.

Meanwhile, the above-described characteristics may be equally applied to an end 140e2 of the insulating layer disposed on the second external electrode 132. That is, when an average length from an end B2e of the second band portion to the extension line E4 of the fourth surface 4 in the second direction is La1, and an average length from the end B2e of the second band portion to an end 140e2 of the insulating layer 140 disposed on the second external electrode 132 in the second direction is Lb2, La2>Lb2 may be satisfied.

In an embodiment, La1 and Lb1 may satisfy 0.2≤Lb1/La1≤0.8. If Lb1/La1 is less than 0.2, the effect of improving bending strength and moisture resistance reliability may be insufficient, and if Lb1/La1 exceeds 0.8, there is a risk of insufficient adhesion strength when mounted on a board. Accordingly, adhesion strength can be secured when mounting the multilayer electronic component 100 on a board.

Likewise, La2 and Lb2 may satisfy 0.2≤Lb2/La2≤0.

In an embodiment, an average thickness "t1" of the plating layers 131b and 132b may be smaller than an average thickness "t2" of the insulating layer 140.

The average thickness "t1" of the plating layers 131b and 132b is not particularly limited, and for example, t1 may be 2 to 10 µm.

The average thickness "t2" of the insulating layer 140 is not particularly limited, and for example, t2 may be 2 to 10 µm.

The average thicknesses t1 and t2 may be values by averaging values measured at five equally spaced points in a cross-section of the body 110 cut from a center thereof in the third direction, in the first and second directions.

The ends 140e1 and 140e2 of the insulating layer 140 may be in contact with the ends of the plating layers 131b and 132b in the first and second band portions B1 and B2, and a region in which the ends of the insulating layer and the ends of the plating layer are in contact with each other may have a step portion.

As set forth above, as one of the various effects of the present disclosure, bending strength characteristics of a multilayer electronic component may be improved by disposing an insulating layer on a mounting surface and disposing the insulating layer to cover an end of an electrode layer.

As one of the various effects of the present disclosure, bonding force between an external electrode and a body may be improved.

Although the embodiments of the present disclosure have been described in detail above, the present disclosure is not limited by the above-described embodiments and the accompanying drawings, and is intended to be limited by the appended claims. Therefore, various forms of substitution, modification, and change will be possible by those skilled in the art within the scope of the technical spirit of the present disclosure described in the claims, which also falls within the scope of the present disclosure.

In addition, the expression 'one embodiment' used in the present disclosure does not mean the same embodiment, and is provided to emphasize and describe different unique characteristics. However, one embodiment presented above is not excluded from being implemented in combination with features of another embodiment. For example, even if a matter described in one specific embodiment is not described in another embodiment, it can be understood as a description related to another embodiment, unless there is a description contradicting or contradicting the matter in the other embodiment.

Terms used in this disclosure are only used to describe one embodiment, and are not intended to limit the disclosure. In this case, singular expressions include plural expressions unless the context clearly indicates otherwise.

While example embodiments have been shown and described above, it will be apparent to those skilled in the art that modifications and variations could be made without departing from the scope of the present invention as defined by the appended claims.

## Claims

1. A multilayer electronic component, comprising:
a body including a dielectric layer and first and second internal electrodes alternately disposed with the dielectric layer interposed therebetween, the body having first and second surfaces opposing each other in a first direction, third and fourth surfaces connected to the first and second surfaces and opposing each other in a second direction, and fifth and sixth surfaces connected to the first to fourth surfaces and opposing each other in a third direction;
a first external electrode including a first connection portion disposed on the third surface, and a first band portion extending from the first connection portion to a portion of the first surface;
a second external electrode including a second connection portion disposed on the fourth surface, and a second band portion extending from the second connection portion to a portion of the first surface; and
an insulating layer disposed on the second surface to extend onto the first and second band portions,
wherein the first and second external electrodes include an electrode layer and a plating layer disposed on the electrode layer, and
the insulating layer is in contact with the electrode layer in the first and second band portions and is disposed to cover an end of the electrode layer.

2. The multilayer electronic component of claim 1, wherein an end of the insulating layer is in contact with an end of the plating layer in the first and second band portions.

3. The multilayer electronic component of claim 1, wherein the electrode layer comprises a base electrode layer disposed to be in contact with the body and a conductive resin layer disposed on the base electrode layer and including a conductive metal and a resin.

4. The multilayer electronic component of claim 3, wherein the conductive resin layer is disposed to cover the base electrode layer.

5. The multilayer electronic component of claim 3, wherein an end of the insulating layer is disposed to contact the base electrode layer in the first and second band portions.

6. The multilayer electronic component of claim 3, wherein an end of the insulating layer is in contact with an end of the plating layer on the conductive resin layer of the first and second band portions.

7. The multilayer electronic component of claim 3, wherein the base electrode layer comprises glass.

8. The multilayer electronic component of claim 3, wherein the insulating layer comprises a resin.

9. The multilayer electronic component of claim 8, wherein the resin included in the insulating layer is at least one of an epoxy resin, a silicone resin, a fluorine resin, an acrylic resin, and ethyl cellulose.

10. The multilayer electronic component of claim 8, wherein the resin included in the insulating layer is the same type as the resin included in the conductive resin layer.

11. The multilayer electronic component of claim 1, wherein the insulating layer comprises a ceramic material.

12. The multilayer electronic component of claim 11, wherein the ceramic material included in the insulating layer is at least one of TiO₂, BaTiO₃, Al₂O₃, BaO, (PbZrₓTi₁₋ₓO₃) (0<x<1), SiC, MgO, and SiO₂.

13. The multilayer electronic component of claim 1, wherein, La1>Lb1 is satisfied, in which La1 is an average length from a distal end of the first band portion to an extension line of the third surface in the second direction, and Lb1 is an average length from the distal end of the first band portion to a distal end of the insulating layer disposed on the first external electrode in the second direction.

14. The multilayer electronic component of claim 13, wherein the average lengths La1 and Lb1 satisfy 0.2≤Lb1/La1≤0.8.

15. The multilayer electronic component of claim 1, wherein an average thickness of the plating layer is smaller than an average thickness of the insulating layer.
